# EUROPEAN PATENT SPECIFICATION

(11) **EP 4 622 175 B1**
(45) Date of publication and mention of the grant of the patent: **31.12.2025**
(21) Application number: 24305427.7
(22) Date of filing: 22.03.2024
(51) Int. Cl.: H04L 9/40, H04L 12/46

(54) **METHOD FOR ESTABLISHING A SECURE CONNECTION TO AN INDUSTRIAL DEVICE**
VERFAHREN ZUM AUFBAU EINER SICHEREN VERBINDUNG ZU EINER INDUSTRIELLEN VORRICHTUNG
PROCÉDÉ D'ÉTABLISSEMENT D'UNE CONNEXION SÉCURISÉE À UN DISPOSITIF INDUSTRIEL

(43) Date of publication of application: 24.09.2025
(73) Proprietor: SCHNEIDER ELECTRIC INDUSTRIES SAS, 92500 Rueil-Malmaison (FR)
(72) Inventor: Tobias Englert, 97836 Bischbrunn (DE); Sebastian Diem, 97907 Hasloch (DE)
(74) Representative: Manitz Finsterwald Patent- und Rechtsanwaltspartnerschaft mbB

(56) References cited:
- US-A1- 2002 191 548
- US-A1- 2016 269 363
- US-A1- 2022 174 043
- US-A1- 2022 353 244

## Description

### Technical Field

The present invention relates to a secure connection to an industrial device.

### Background

In an industrial environment such as an Industry 4.0 environment or an Industrial Internet of Thing (IIoT) environment in an industrial location such as a factory, an industrial device (or called as industrial controller or industrial equipment) may have an outbound connection to the outside environment, for example, through Internet for an Industry 4.0 environment, or via a protocol like MQTT for an IloT environment, so that it is possible for a technician outside the industrial environment to remotely access an industrial device for different kinds of purposes, such as trouble-shooting, diagnosis, maintenance, on-site support, and so on.

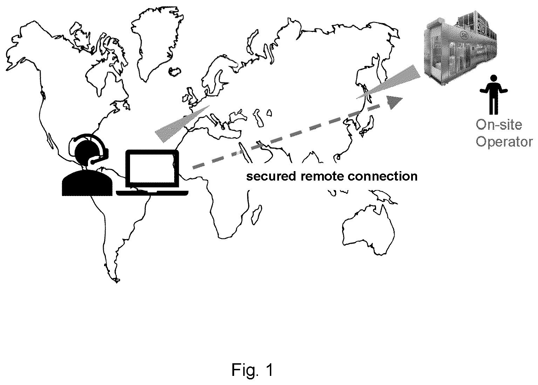

For an example, as shown in Fig. 1, a German company has a factory with many industrial devices in Asia. One or more of the industrial devices often stops unexpected, and the on-site operator in Asia cannot localize or fix the problem. In such a case, a remote control from an expert in Germany is needed for trouble shooting through an outbound connection as mentioned above.

Such an outbound connection faces many challenges, among which the most important one is security, that is, preventing any outside attack via this outbound connection. However, by taking the security factor into consideration, conventional solutions involve many complicated mechanisms and thus increase the complexity and costs for establishing such an outbound connection.

For example, an industrial device or a group of industrial devices are arranged with a connection box, e.g., an edge gateway, which can be accessed from outside, e.g., via Internet by an application running on a public cloud. The application is responsible for registration and connection of the industrial device, provides means for user authentication and authorization, and functions as a further gateway to allow other peers to establish a connection to a registered/connected industrial device. However, such a cloud application is the single-point of failure, and vulnerability thereof can cause exposure of many industrial devices to attack. Further, it usually includes a proprietary component for connection between the local network of the industrial environment and the cloud application, and thus the user must trust the cloud application provider and his competency.

For another example, an iPC (industrial PC) in the local network of the industrial environment is accessed via a remote tool, e.g. TeamViewer. However, this solution requires additional hardware (iPC) with installed tools and additional thirdparty software, and depends on local network/security settings if the TeamViewer is working without any additional configuration effort.

For a further example, a site-to-site VPN connection can be established via an edge gateway or an iPC with Internet access, in which an iPC with a CODESYS Gateway control may function as a bridge to access the industrial device. However, this solution requires also additional hardware (iPC), depends on the network architecture between the iPC and industrial device, relies on the CODESYS Gateway technology, and depends on the ability of the iPC to connect to one or more industrial devices. In addition, a site-to-site VPN connection normally connects the two local networks of the two sites, and thus there is a challenge to restrict the communication between the two local networks so as to avoid exposing the information other than the intended work from one site to another site.

In addition, the conventional solutions have a disadvantage that it is not easy to ensure a remote connection to the industrial device intended to be connected among a large number of industrial devices in the industrial environment. Related technology is known from US 2002/191548 A1 and US 2022/174043 A1

### Summary

A method is provided for establishing a secure connection to an industrial device. The present invention is set out in the appended claims.

### Brief Description of Drawings

Fig. 1 illustrates a scenario that needs a connection to an industrial device;
Fig. 2 illustrates an example of establishing a connection to an industrial device.

### Detailed Description

It is provided a method for establishing a secure connection to an industrial device in an industrial environment, such as an Industry 4.0 environment or an Industrial Internet of Thing (IIoT) environment in an industrial location such as a factory.

The connection is established between an industrial device and a remote device. The remote device is a device outside the industrial environment. The remote device may be located in a totally different place with respect to the location of the industrial environment, e.g., in a different city or even in a different country. However, the remote device may also be located in the same place of the industrial environment, e.g., a technician brings a remote device into the factory where the industrial environment is located, and connects the remote device to an industrial device through the provided method. That is, the term "remote" means that the remote device is not within the local network of the industrial environment, and thus cannot be connected to an intended industrial device directly via the local network.

One of the industrial device and the remote device may be referred as a first device, and the other one of the industrial device and the remote device may be referred as a second device.

The method for establishing a secure connection to an industrial device in an industrial environment comprise the following steps: creating a virtual private network (VPN); storing a first configuration information of the VPN for the first device; storing a second configuration information of the VPN for the second device; connecting the first device to the VPN based on the first configuration information; creating at least one first token that includes the second configuration information; transferring the second configuration information to the second device through the at least one first token; connecting the second device to the VPN based on the second configuration information transferred through the at least one first token; and then communicating between the first device and the second device via the VPN.

In the provided method, a VPN is created, e.g., over Internet or a Public cloud. The VPN may be a temporary VPN having a predetermined lifetime, e.g., in the order of minutes, hours, or days, that is properly predetermined for a technician to complete the intended work such as trouble-shooting, diagnosis, maintenance, on-site support. The predetermined lifetime may be limited to a maximum value, and even if the intended work cannot be completed within the predetermined lifetime, the VPN will be terminated, and a further VPN has to be created for a new connection in order to continue the intended work. The shorter the lifetime, the smaller the attack surface left for a potential attacker, so as to increase the security of the connection.

The VPN is for connecting the industrial device and a remote device, i.e., the first device and the second device, but may also be used for connecting a further device that may help the intended work.

After the VPN is created, a first configuration information of the VPN for the first device is stored, and a second configuration information of the VPN for the second device is stored. The first device can be connected to the VPN based on the first configuration information, and the second device can be connected to the VPN based on the second configuration information.

The first configuration information may be different form the second configuration information. In this case, the first configuration information is the configuration information specific for the first device for being connected to the VPN, and the second configuration information is the configuration information specific for the second device for being connected to the VPN.

The first configuration information may be identical to the second configuration information, being applicable to each of the first device and the second device for being connected to the VPN.

The VPN may be created by one of the first device and the second device, but may also be created by a third device other than the first device and the second device.

If the VPN is created by one of the first device and the second device, e.g., by the first device, the first configuration information and the second configuration information may be first stored in the first device, i.e., the device that creates the VPN.

If the VPN is created by the third device, the first configuration information and the second configuration information may be stored in the third device.

The first configuration information and/or the second configuration information may be further sent to another device or other devices to be used in the subsequent step of the method, for example, for creating at least one first token.

No matter stored in the first device, the second device, the third device, or any other devices, if the first configuration information is identical to the second configuration information, it is preferred to store one single configuration information used as the first configuration information and the second configuration information.

In addition, each of the first configuration information and the second configuration information not only comprises connecting information for connecting first device or the second device to the VPN, but also may comprise security information for a secure communication via the VPN, e.g., encryption mechanism information for encrypting the communication over the VPN, credential information for authentication and authorization, and so on.

If the VPN is created by the first device, the first device can then be connected to the VPN based on the first configuration information. This connecting step can be performed immediately after the creation of the VPN, but can also be performed at any time thereafter before a user starts to use the VPN for a communication between the first device and the second device.

The first device creates a least one first token that includes the second configuration information, and then transfers the second configuration information to the second device through the at least one first token.

After receiving the second configuration information, the second device can be connected to the VPN based on the second configuration information. This connecting step can be performed immediately after receiving the second configuration information, but can also be performed at any time thereafter before a user starts to use the VPN for a communication between the first device and the second device.

In other words, the step for connecting the first device to the VPN and the step for connecting the second device to the VPN do not have a predetermined sequence, and thus can be performed at any possible sequence or at the same time.

If the VPN is created by a third device, the third device creates a least one first token that includes the second configuration information, and then transfers the second configuration information to the second device through the at least one first token, so that the second device can be connected to the VPN based on the second configuration information.

In addition, the third device creates at least one second token that includes the first configuration information, and transfers the first configuration information to the first device through the at least one second token, so that the first device can be connected to the VPN based on the first configuration information. If the first configuration information is identical to the second configuration information, the at least one second token may also be identical to the at least one first token, so that no addition step for creating the at least one second token is needed.

Further, the step of creating the at least one first token and the step of creating the at least one second token do not have a predetermined sequence, and the step of transferring the first configuration information to the first device through the at least one second token and the step of transferring the second configuration information to the second device through the at least one first token do also not have a predetermined sequence. In addition, the step of creating the at least one first token may be performed after transferring the first configuration information to the first device through the at least one second token, or even after the first device is connected to the VPN. Similarly, the step of creating the at least one second token may be performed after transferring the second configuration information to the second device through the at least one first token, or even after the second device is connected to the VPN.

For each of the at least one first token and the at least one second token, the following applies:
The at least one token can be a single token or a plurality of tokens. If the at least one token is a single token, it includes the entirety of the corresponding configuration information (i.e., the first configuration information or the second configuration information). If the at least one token is a plurality of tokens, each of the plurality of tokens includes a part of the corresponding configuration information, and the entirety of the corresponding configuration information is derivable from the plurality of tokens.

No matter if it is a single token or a plurality of tokens, each token can be in a form of a physical entity, or in a form of a computer readable format, such as an electronic message, an electronic file, etc.

If a token is in a form of a physical entity, as an alternative, the physical entity can be any kind of portable computer-readable storage medium that stores the corresponding configuration information or a part thereof, including, but not limited to, one of USB-memory stick, SD-card, CD, mobile hard drive, floppy disk.

As an alternative, a physical entity can also be any kind of portable electronic device that stores the corresponding configuration information or a part thereof, including, but not limited to, one of: mobile phone, tablet PC, laptop, PDA.

As an alternative, a physical entity can also be any physical body on which the corresponding configuration information or a part thereof is expressed, e.g., a piece of paper or multiple piece of paper on which the corresponding configuration information is written, printed, and/or carved.

A physical entity as a token can be sent to the vicinity of a corresponding device (i.e., the first device and/or the second device) via any possible physical entity delivery manner, e.g., via a public post service or a private delivery manner, through a person, a vehicle (flight, ship, car, track, drone, etc.), or any combination thereof.

After received the token, the corresponding configuration information can be transferred into the corresponding device for establishing the corresponding connection to the VPN.

For example, if a token is a portable computer-readable storage medium, the corresponding configuration information stored therein can be read by a corresponding medium reader and then sent to the corresponding device. The corresponding medium reader may be directly connected to the corresponding device, so that the corresponding device may obtain the corresponding configuration information directly. The corresponding medium reader may be connected to another device in the same local network of the corresponding device, so that the corresponding configuration information may be further sent to the corresponding device via the local network.

For another example, if a token is a portable electronic device, the corresponding configuration information stored therein can be directly transferred to the corresponding device, e.g., via a near field communication (NFC) connection, via a Bluetooth connection, or via a direct Wi-Fi connection. Alternatively, the corresponding configuration information stored in the portable electronic device can be transferred to another device in the same local network of the corresponding device, e.g., via a near field communication (NFC) connection, via a Bluetooth connection, or via a direct Wi-Fi connection, so that the corresponding configuration information may be further sent to the corresponding device via the local network.

For a further example, if a token is in a form of a physical body on which the corresponding configuration information or a part thereof is expressed, e.g., written, printed, and/or carved, the configuration information on the physical body can be read by a person and then manually input into the corresponding device, or can be read and recognized by a scanning device, so that the recognized corresponding configuration information can be sent to the corresponding device directly if the scanning device is directly connected to the corresponding device, or sent to the corresponding device via a local network if the scanning device is connected to another device in the same local network of the corresponding device.

If a token is in a form of a computer readable format, e.g., an electronic message or an electronic file, it can be sent to the vicinity of the corresponding device (i.e., the first device or the second device) via any possible electronic communication manner, e.g., email, file transfer protocol (FTP), short message service (SMS), instant message application, etc. After a device in the vicinity of the corresponding device received the token, the device may transfer the corresponding configuration information (i.e., the first configuration information or the second configuration information) of part thereof stored in the token to the corresponding device, e.g., via a local network, an NFC connection, a Bluetooth connection, a Wi-Fi directly connection. Alternative, the corresponding configuration information may be read by a person and then manually input into the corresponding device. Alternatively, the token may be directly sent to the corresponding device, if the corresponding device itself supports the used electronic communication manner for sending the token.

When a token or the configuration information in a token is transferred to an industrial device directly through, e.g., NFC, USB, scanning, or manual input, a personal physical access to the industrial device is required. This further improves the security, since only the authorized person is allowed to have the personal physical access to the industrial device while other alternatives like using local network, Bluetooth, or WiFi direct connection still provide a chance to hacker. In addition, such a personal physical assess can make it surer that the token or the configuration information is transferred to the intended industrial device.

The corresponding configuration information or a part thereof in a token can be in any form that is able to contain the configuration information or a part thereof, e.g., in a form of plan text, barcode, QR-code, or any combination thereof. Before the configuration information is put into the intended form, it may be encrypted by any possible encryption manner to increase the security of token transfer.

As mentioned above, a token may contain the entirety of the corresponding configuration information or only a part thereof. If it contains the entirety of the corresponding configuration information, the corresponding configuration information can be transferred to the corresponding device using a single token.

If a token contains a part of the corresponding configuration information, a plurality of tokens is needed for transferring the entirety of the corresponding configuration information. In this case, each of the plurality of tokens may be in the same form or in a different form. For example, one of the tokens may be in the form of physical entity and another token in the form of a computer readable format. For another example, two tokens are in the form of physical entity while one is a portable computer-readable storage medium and the other is a physical body with the information being written thereon. In short, each of the plurality of tokens can be in a different possible form, and/or transferred via a different possible manner, and/or transferred at a different time point, which can improve the security for transferring the configuration information, thereby improving the security of the VPN connection.

After a corresponding device or another device in the vicinity of the corresponding device received each of the plurality of tokens via the same manner or different manners, the part of the corresponding configuration information can be read out from each token, and then combined to obtain the entirety of the corresponding configuration information for the connection to the VPN.

After a corresponding device (i.e., the first device or the second device) receives its corresponding configuration information (i.e., the first configuration information or the second configuration information), the corresponding device can be connected to the VPN. When both of the first device and the second device are connected to the VPN, the first device and the second device (i.e., the industrial device and the remote device) can communication with each other through the VPN.

In addition, one or more of the tokens mentioned above may be configured with a lifetime. If the lifetime of a token elapses before the configuration information in the token is used for connecting a device to the VPN, the VPN is terminated, so that a new VPN has to be created for the intended work. This can further improve the security of the method. The lifetime of a token can be marked in the token, so that whether the lifetime elapses or not can be determined upon reading the token. As an alternative, the lifetime of a token can be configured with the VPN, so that if the device corresponding to the token has not been connected to the VPN before the lifetime elapses, VPN is terminated.

The following examples are used to explain the invention in a manner easier to be understood, but not to limit the scope of the invention.

### Example 1:

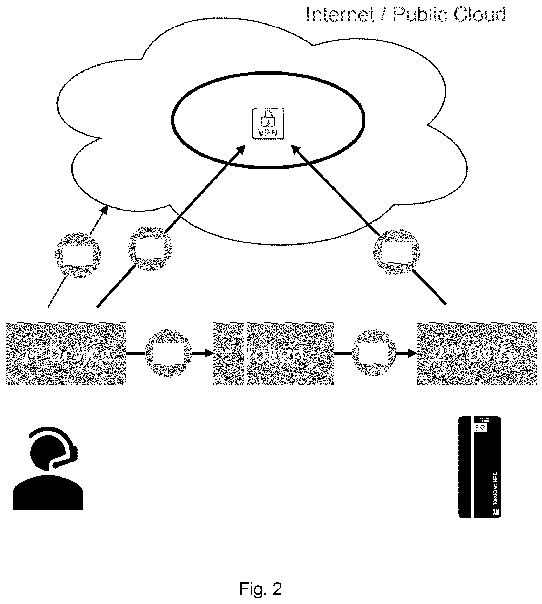

Referring to Fig. 2, when an expert/technician in Germany as shown in Fig. 1 wants to establish a secure connection to an industrial device in Asia for trouble shooting, the expert may use a first device, e.g., a desktop, in Germany to create a VPN on a public cloud in step 1.

Then the first device may be connected to the VPN in step 2. As mentioned above, step 2 is not necessarily performed immediately after step 1, but can be performed at any time before the Expert starts his trouble shooting work that needs a communication between the first device and the second device (in this example between the desktop and the industrial device to be trouble shot) through the VPN.

In step 3, token is generated to include the configuration information for the industrial device, based on which the industrial device can be connected to the VPN. Then, in step 4 the configuration information for the industrial device is transferred to the industrial device through the token. As mentioned above, the token may be one single token including the entirety of the configuration information for the second device. Alternatively, the token may be a plurality of tokens, each including a part of the configuration information for the industrial device, while each token can be in a different form, and delivered through a different way at a different time point.

For example, a single token in the form of USB stick, SD card, or printed paper can be delivered to Asia through public post if the work is not urgent. Alternatively, a plurality of tokens in the form of USB stick and/or SD card and/or printed paper can be delivered to Asia through different public posts, or through the same public posts but different packets at different time. Then, the USB stick or SD card can be read by a corresponding reader so that the configuration information can be obtained and transferred to the industrial device, or the configuration information printed on the paper can be read by a person and then input into the industrial device. In the case of plurality of tokens, the information from different tokens are combined to obtain the entirety of the configuration information.

For another example, a single token in the form of a computer readable format, such as an electronic message or an electronic message file, can be transferred through an electronic communication manner, such as secured email, secured FTP, etc. Alternatively, a plurality of tokens in the format of electronic message and/or electronic file can be transferred through different electronic communication manners, e.g., one as electronic message through a secured email and another as electronic file through a secured FTP. In the case of plurality of tokens, the information from different tokens are combined to obtain the entirety of the configuration information.

For another example, in the case of a plurality of tokens, it is also possible to create one token in the form of, e.g., USB stick and then deliver it through public post and another token in the form of, e.g., electronic message, and then deliver it through, e.g., a secured email.

In short, in the case of plurality of tokens of which each contains a part of the configuration information, any possible combinations of different token forms, different delivery manners, and different delivery time points can be applied.

After the industrial device obtains the entirety of the configuration information, it can be connected to the VPN based on the configuration information at any time before the expert needs the communication between the desktop and the industrial device for troubling shooting.

Alternatively, the VPN may be created by a third device instead of the desktop with which trouble shooting will be conducted, and the configuration information for the desktop may also be transferred to the desktop via a token or a plurality of token. This is basically the same as creating and transferring the token to the second device as mentioned above, and thus is not repeated here.

Alternatively, the VPN may also be created by the industrial device in Asia and then the token is generated and sent to the expert in Germany.

In addition, before any trouble shooting work is needed, it is also possible to create a VPN in advance, and transfer the configuration information to the desktop and the industrial device in advance through token. Thus, when an industrial equipment does not work properly, the both sides may immediately use the available configuration information to establish connections to the VPN, so that the expert may starts the trouble shooting work immediately without any delay due to the delivery of the token. In this context, a plurality of VPNs may be created in advance, and the configuration information for each VPN is delivered to the both sides. Both sides respectively store a pair of configuration information for each of the VPNs in a predetermined sequence, so that each time a trouble shooting is needed, both sides may use a corresponding pair of configuration information stored in advance to connect the remote device (desktop) and the industrial device to a same VPN for trouble shooting. When a connected VPN is terminated due to the lifetime, a further VPN can be immediately established based on the pair of configuration information of another VPN stored in advance.

### Example 2:

An expert outside a factory with industrial devices may bring his laptop into the factory, but he does not need to connect his laptop to the local network of the industrial devices. Instead, the expert many use his laptop to create a VPN and then generate a token including the configuration information for an industrial device. The token can be transferred to the industrial device through, e.g., NFC communication or Bluetooth communication directly from the laptop to the industrial device, or through a USB stick or SD card to be read and sent to the industrial device.

With the provided method, a secure connection via the VPN can be established between an industrial device and a remote device, e.g., a desktop/laptop.

Further, since the on-site operator knowns exactly which industrial device has problem, the on-site operator can easily choose the industrial device to be trouble shot as the second device and connect it to the VPN. Hence, the disadvantage in the conventional manner that a remote expert is difficult to identify which industrial device should be trouble shot can be overcome.

Furthermore, the person with a remote device does not need to understand the architecture of the local network for accessing the industrial devices, but can use a simple and secure manner as provided above to remotely connect to an industrial device for troubling shooting, no matter if the person is far away from the industrial device or nearby in the same building.

In addition, by setting a proper lifetime of the VPN and/or by including security information in the token, the security of the connection can be further improved.

Moreover, the method provides a unified manner that is independent from the architecture of the local network of the industrial devices, and thus no special configuration is needed in local network, in the industrial devices, or in the remote device.

## Claims

1. A method for establishing a secure connection between an industrial device and a remote device, wherein one of the industrial device and the remote device is referred as a first device, and the other one of the industrial device and the remote device is referred as a second device,
the method comprising:
creating a virtual private network, VPN;
storing a first configuration information of the VPN for the first device,
wherein the first configuration information comprises connecting information for connecting the first device to the VPN;
storing a second configuration information of the VPN for the second device, wherein the second configuration information comprises connecting information for connecting the second device to the VPN;
connecting the first device to the VPN based on the first configuration information;
creating at least one first token that includes the second configuration information;
transferring by the first device
the second configuration information to the second device through the at least one first token;
connecting the second device to the VPN based on the second configuration information transferred through the at least one first token;
communicating between the first device and the second device via the VPN.

2. The method of claim 1, wherein the VPN is created by the first device, and the first configuration information and the second configuration information are stored in the first device.

3. The method of claim 1, wherein the VPN is created by a third device, the first configuration information and the second configuration information are stored in the third device, and the step of connecting the first device to the VPN based on the first configuration information comprises:
creating at least one second token that includes the first configuration information;
transferring the first configuration information to the first device through the at least one second token;
connecting the first device to the VPN based on the first configuration information transferred through the at least one second token.

4. The method of claim 3 wherein
the at least one first token is one first token that includes the entirety of the second configuration information; and/or
the at least one second token is one second token that includes the entirety of the first configuration information.

5. The method of any one of claims 3 to 4, wherein
the at least one first token is a plurality of first tokens, and each of the plurality of first tokens includes a part of the second configuration information, and the entirety of the second configuration information is derivable from the plurality of first tokens; and/or
the at least one second token is a plurality of second tokens, and each of the plurality of second tokens includes a part of the first configuration information, and the entirety of the first configuration information is derivable from the plurality of second tokens.

6. The method of any one of claims 3 to 5, wherein
each of the at least one first token is in a form of a physical entity, or a computer readable format; and/or
each of the at least one second token is in a form of a physical entity, or a computer readable format.

7. The method of claim 6, wherein the physical entity is one of the following:
a portable computer-readable storage medium storing at least a part of the second configuration information or at least a part of the first configuration information;
a portable electronic device storing at least a part of the second configuration information or at least a part of the first configuration information;
a physical body on which at least a part of the second configuration information or at least a part of the first configuration information is expressed.

8. The method of claim 6 or 7, wherein
when a token of the at least one first token is in the form of a computer readable format, transferring the second configuration information to the second device through the at least one first token comprises: sending the token via an electronic communication manner;
when a token of the at least one first token is in the form of a physical entity, transferring the second configuration information to the second device through the at least one first token comprises: sending the token through a physical entity delivery manner;
when a token of the at least one second token is in the form of a computer readable format, transferring the first configuration information to the first device through the at least one second token comprises: sending the token via an electronic communication manner;
when a token of the at least one second token is in the form of a physical entity, transferring the first configuration information to the first device through the at least one second token comprises: sending the token through a physical entity delivery manner.

9. The method of any one of claims 3 to 8 wherein
when the at least one first token is a plurality of first tokens, at least two of the plurality of first tokens are in different forms, and/or transferred in different manners, and/or transferred at different time points;
when the at least one second token is a plurality of second tokens, at least two of the plurality of second tokens are in different forms, and/or transferred in different manners, and/or transferred at different time points.

10. The method of any one of claims 3 to 9 wherein
the first configuration information is identical to the second configuration information, being applicable to both of the first device and the second device for being connected to the VPN;
preferably, the at least one first token is identical to the at least one second token.

11. The method of any one of claims 3 to 10, wherein at least one of the at least one first token and/or at least one of the at least one second token is configured with a lifetime, and if the lifetime of a token elapses before the configuration information in the token is used for connecting a device to the VPN, the VPN is terminated.

12. The method of any one of the preceding claims, wherein each of the first configuration information and the second configuration information comprises security information for a secure communication via the VPN.

13. The method of any one of the preceding claims, wherein the first configuration information, or the part of first configuration information, or the second configuration information, or the part of second configuration information is encrypted.

14. The method of any one of the preceding claims, wherein the first configuration information, or the part of first configuration information, or the second configuration information, or the part of second configuration information is in at least one of the following forms: plain text, barcode, QR-code.

15. The method of any one of the preceding claims, wherein the VPN is a temporary VPN with a predetermined lifetime.

## Patentansprüche

1. Verfahren zum Herstellen einer sicheren Verbindung zwischen einer industriellen Vorrichtung und einer entfernten Vorrichtung, wobei eine von der industriellen Vorrichtung und der entfernten Vorrichtung als eine erste Vorrichtung bezeichnet wird und die andere von der industriellen Vorrichtung und der entfernten Vorrichtung als eine zweite Vorrichtung bezeichnet wird, wobei das Verfahren umfasst:
Erzeugen eines virtuellen privaten Netzwerks, VPN;
Speichern einer ersten Konfigurationsinformation des VPN für die erste Vorrichtung, wobei die erste Konfigurationsinformation eine Verbindungsinformation zum Verbinden der ersten Vorrichtung mit dem VPN umfasst;
Speichern einer zweiten Konfigurationsinformation des VPN für die zweite Vorrichtung, wobei die zweite Konfigurationsinformation eine Verbindungsinformation zum Verbinden der zweiten Vorrichtung mit dem VPN umfasst;
Verbinden der ersten Vorrichtung mit dem VPN basierend auf der ersten Konfigurationsinformation;
Erzeugen mindestens eines ersten Tokens, das die zweite Konfigurationsinformation enthält;
Übertragen der zweiten Konfigurationsinformation durch die erste Vorrichtung an die zweite Vorrichtung durch das mindestens eine erste Token;
Verbinden der zweiten Vorrichtung mit dem VPN basierend auf der zweiten Konfigurationsinformation, die durch das mindestens eine erste Token übertragen wird;
Kommunizieren zwischen der ersten Vorrichtung und der zweiten Vorrichtung über das VPN.

2. Verfahren nach Anspruch 1, wobei das VPN durch die erste Vorrichtung erzeugt wird und die erste Konfigurationsinformation und die zweite Konfigurationsinformation in der ersten Vorrichtung gespeichert werden.

3. Verfahren nach Anspruch 1, wobei das VPN durch eine dritte Vorrichtung erzeugt wird, die erste Konfigurationsinformation und die zweite Konfigurationsinformation in der dritten Vorrichtung gespeichert werden und der Schritt des Verbindens der ersten Vorrichtung mit dem VPN basierend auf der ersten Konfigurationsinformation umfasst:
Erzeugen mindestens eines zweiten Tokens, das die erste Konfigurationsinformation enthält;
Übertragen der ersten Konfigurationsinformation an die erste Vorrichtung durch das mindestens eine zweite Token;
Verbinden der ersten Vorrichtung mit dem VPN basierend auf der ersten Konfigurationsinformation, die durch das mindestens eine zweite Token übertragen wird.

4. Verfahren nach Anspruch 3, wobei
das mindestens eine erste Token ein erstes Token ist, das die Gesamtheit der zweiten Konfigurationsinformation enthält; und/oder
das mindestens eine zweite Token ein zweites Token ist, das die Gesamtheit der ersten Konfigurationsinformation enthält.

5. Verfahren nach einem der Ansprüche 3 bis 4, wobei
das mindestens eine erste Token eine Vielzahl von ersten Tokens ist und jedes der Vielzahl von ersten Tokens einen Teil der zweiten Konfigurationsinformation enthält und die Gesamtheit der zweiten Konfigurationsinformation von der Vielzahl von ersten Tokens ableitbar ist; und/oder
das mindestens eine zweite Token eine Vielzahl von zweiten Tokens ist und jedes der Vielzahl von zweiten Tokens einen Teil der ersten Konfigurationsinformation enthält und die Gesamtheit der ersten Konfigurationsinformation von der Vielzahl von zweiten Tokens ableitbar ist.

6. Verfahren nach einem der Ansprüche 3 bis 5, wobei
jedes des mindestens einen ersten Tokens in Form einer physikalischen Entität oder eines computerlesbaren Formats vorliegt; und/oder
jedes des mindestens einen zweiten Tokens in Form einer physikalischen Entität oder eines computerlesbaren Formats vorliegt.

7. Verfahren nach Anspruch 6, wobei die physikalische Entität eine der folgenden ist:
ein tragbares computerlesbares Speichermedium, das mindestens einen Teil der zweiten Konfigurationsinformation oder mindestens einen Teil der ersten Konfigurationsinformation speichert;
eine tragbare elektronische Vorrichtung, die mindestens einen Teil der zweiten Konfigurationsinformation oder mindestens einen Teil der ersten Konfigurationsinformation speichert;
einen physikalischen Körper, auf dem mindestens ein Teil der zweiten Konfigurationsinformation oder mindestens ein Teil der ersten Konfigurationsinformation ausgedrückt wird.

8. Verfahren nach Anspruch 6 oder 7, wobei
wenn ein Token des mindestens einen ersten Tokens in Form eines computerlesbaren Formats vorliegt, das Übertragen der zweiten Konfigurationsinformation an die zweite Vorrichtung durch das mindestens eine erste Token umfasst: Senden des Tokens in einer Weise einer elektronischen Kommunikation;
wenn ein Token des mindestens einen ersten Tokens in Form einer physikalischen Entität vorliegt, das Übertragen der zweiten Konfigurationsinformation an die zweite Vorrichtung durch das mindestens eine erste Token umfasst: Senden des Tokens in einer Weise einer Lieferung einer physikalischen Entität;
wenn ein Token des mindestens einen zweiten Tokens in Form eines computerlesbaren Formats vorliegt, das Übertragen der ersten Konfigurationsinformation an die erste Vorrichtung durch das mindestens eine zweite Token umfasst: Senden des Tokens in einer Weise einer elektronischen Kommunikation;
wenn ein Token des mindestens einen zweiten Tokens in Form einer physikalischen Entität vorliegt, das Übertragen der ersten Konfigurationsinformation an die erste Vorrichtung durch das mindestens eine zweite Token umfasst: Senden des Tokens in einer Weise einer Lieferung einer physikalischen Entität.

9. Verfahren nach einem der Ansprüche 3 bis 8, wobei
wenn das mindestens eine erste Token eine Vielzahl von ersten Tokens ist, mindestens zwei der Vielzahl von ersten Tokens in unterschiedlichen Formen vorliegen und/oder auf unterschiedliche Weisen übertragen werden und/oder zu unterschiedlichen Zeitpunkten übertragen werden;
wenn das mindestens eine zweite Token eine Vielzahl von zweiten Tokens ist, mindestens zwei der Vielzahl von zweiten Tokens in unterschiedlichen Formen vorliegen und/oder auf unterschiedliche Weisen übertragen werden und/oder zu unterschiedlichen Zeitpunkten übertragen werden.

10. Verfahren nach einem der Ansprüche 3 bis 9, wobei
die erste Konfigurationsinformation mit der zweiten Konfigurationsinformation identisch ist, die sowohl auf die erste Vorrichtung als auch auf die zweite Vorrichtung anwendbar ist, um mit dem VPN verbunden zu werden;
vorzugsweise das mindestens eine erste Token mit dem mindestens einen zweiten Token identisch ist.

11. Verfahren nach einem der Ansprüche 3 bis 10, wobei mindestens eines des mindestens einen ersten Tokens und/oder mindestens eines des mindestens einen zweiten Tokens mit einer Lebensdauer konfiguriert ist, und wenn die Lebensdauer eines Tokens abläuft, bevor die Konfigurationsinformation in dem Token zum Verbinden einer Vorrichtung mit dem VPN verwendet wird, das VPN beendet wird.

12. Verfahren nach einem der vorhergehenden Ansprüche, wobei jede der ersten Konfigurationsinformation und der zweiten Konfigurationsinformation Sicherheitsinformation für eine sichere Kommunikation über das VPN umfasst.

13. Verfahren nach einem der vorhergehenden Ansprüche, wobei die erste Konfigurationsinformation oder der Teil der ersten Konfigurationsinformation oder die zweite Konfigurationsinformation oder der Teil der zweiten Konfigurationsinformation verschlüsselt ist.

14. Verfahren nach einem der vorhergehenden Ansprüche, wobei die erste Konfigurationsinformation oder der Teil der ersten Konfigurationsinformation oder die zweite Konfigurationsinformation oder der Teil der zweiten Konfigurationsinformation in mindestens einer der folgenden Formen vorliegt: Klartext, Strichcode, QR-Code.

15. Verfahren nach einem der vorhergehenden Ansprüche, wobei das VPN ein temporäres VPN mit einer vorbestimmten Lebensdauer ist.

## Revendications

1. Procédé pour établir une connexion sécurisée entre un dispositif industriel et un dispositif distant, dans lequel l'un du dispositif industriel et du dispositif distant est désigné comme premier dispositif, et l'autre du dispositif industriel et du dispositif distant est désigné comme deuxième dispositif,
le procédé comprenant les étapes consistant à :
créer un réseau privé virtuel (VPN, Virtual Private Network) ;
stocker des premières informations de configuration du VPN pour le premier dispositif, les premières informations de configuration comprenant des informations de connexion destinées à connecter le premier dispositif au VPN ;
stocker des secondes informations de configuration du VPN pour le deuxième dispositif, les secondes informations de configuration comprenant des informations de connexion destinées à connecter le deuxième dispositif au VPN ;
connecter le premier dispositif au VPN sur la base des premières informations de configuration ;
créer au moins un premier jeton qui inclut les secondes informations de configuration ;
transférer, via le premier dispositif, les secondes informations de configuration au deuxième dispositif par l'intermédiaire dudit au moins un premier jeton ;
connecter le deuxième dispositif au VPN sur la base des secondes informations de configuration transférées par l'intermédiaire dudit au moins un premier jeton ;
communiquer entre le premier dispositif et le deuxième dispositif via le VPN.

2. Procédé selon la revendication 1, dans lequel le VPN est créé par le premier dispositif, et les premières informations de configuration et les secondes informations de configuration sont stockées dans le premier dispositif.

3. Procédé selon la revendication 1, dans lequel le VPN est créé par un troisième dispositif, les premières informations de configuration et les secondes informations de configuration sont stockées dans le troisième dispositif, et les étapes consistant à connecter le premier dispositif au VPN sur la base des premières informations de configuration comprend de :
créer au moins un second jeton qui inclut les premières informations de configuration ;
transférer les premières informations de configuration au premier dispositif par l'intermédiaire dudit au moins un second jeton ;
connecter le premier dispositif au VPN sur la base des premières informations de configuration transférées par l'intermédiaire dudit au moins un second jeton.

4. Procédé selon la revendication 3, dans lequel
ledit au moins un premier jeton est un premier jeton qui inclut l'entièreté des secondes informations de configuration ; et/ou
ledit au moins un second jeton est un second jeton qui inclut l'entièreté des premières informations de configuration.

5. Procédé selon l'une quelconque des revendications 3 à 4, dans lequel
ledit au moins un premier jeton est une pluralité de premiers jetons, et chacun de la pluralité de premiers jetons inclut une partie des secondes informations de configuration, et l'entièreté des secondes informations de configuration peut être dérivée de la pluralité de premiers jetons ; et/ou
ledit au moins un second jeton est une pluralité de seconds jetons, et chacun de la pluralité de seconds jetons inclut une partie des premières informations de configuration, et l'entièreté des premières informations de configuration peut être dérivée de la pluralité de seconds jetons.

6. Procédé selon l'une quelconque des revendications 3 à 5, dans lequel
chacun desdits au moins un premier jeton est dans une forme d'une entité physique, ou un format lisible par ordinateur ; et/ou
chacun desdits au moins un second jeton est dans une forme d'une entité physique, ou un format lisible par ordinateur.

7. Procédé selon la revendication 6, dans lequel l'entité physique est l'un des éléments suivants :
un support de stockage portable lisible par ordinateur stockant une partie des secondes informations de configuration ou au moins une partie des premières informations de configuration ;
un dispositif électronique portable stockant au moins une partie des secondes informations de configuration ou au moins une partie des premières informations de configuration ;
un corps physique sur lequel au moins une partie des secondes informations de configuration ou au moins une partie des premières informations de configuration sont exprimées.

8. Procédé selon la revendication 6 ou 7, dans lequel :
quand un jeton dudit au moins un premier jeton est dans la forme d'un format lisible par ordinateur, l'étape consistant à transférer les secondes informations de configuration au deuxième dispositif par l'intermédiaire dudit au moins un premier jeton comprend d'envoyer le jeton via un mode de communication électronique ;
quand un jeton dudit au moins un premier jeton est dans la forme d'une entité physique, l'étape consistant à transférer les secondes informations au deuxième dispositif par l'intermédiaire dudit au moins un premier jeton comprend d'envoyer le jeton par l'intermédiaire d'un mode de livraison d'entité physique ;
quand un jeton dudit au moins un second jeton est dans la forme d'un format lisible par ordinateur, l'étape consistant à transférer les premières informations de configuration au premier dispositif par l'intermédiaire dudit au moins un second jeton comprend d'envoyer le jeton via un mode de communication électronique ;
quand un jeton dudit au moins un second jeton est dans la forme d'une entité physique, l'étape consistant à transférer les premières informations de communication au premier dispositif par l'intermédiaire dudit au moins un second jeton comprend d'envoyer le jeton par l'intermédiaire d'un mode de livraison d'entité physique.

9. Procédé selon l'une quelconque des revendications 3 à 8, dans lequel
quand ledit au moins un premier jeton est une pluralité de premiers jetons, deux au moins de la pluralité de premiers jetons sont de formes différentes, et/ou transférés de différentes manières, et/ou transférés à des instants différents ;
quand ledit au moins un second jeton est une pluralité de seconds jetons, deux au moins de la pluralité de seconds jetons sont de formes différentes, et/ou transférés de différentes manières, et/ou transférés à des instants différents.

10. Procédé selon l'une quelconque des revendications 3 à 9, dans lequel
les premières informations de configuration sont identiques aux secondes informations de configuration, applicables à la fois au premier dispositif et au second dispositif pour être connectés au VPN ;
de préférence, ledit au moins un premier jeton est identique audit au moins un second jeton.

11. Procédé selon l'une quelconque des revendications 3 à 10, dans lequel l'un au moins dudit au moins un premier jeton et/ou l'un au moins dudit au moins un second jeton sont configurés avec une durée de vie, et si la durée de vie d'un jeton s'écoule avant que les informations de configuration dans le jeton soient utilisées pour connecter un dispositif au VPN, le VPN est terminé.

12. Procédé selon l'une quelconque des revendications précédentes, dans lequel les premières informations de connexion et les secondes informations de connexion comprennent chacune des informations de sécurité pour une communication sécurisée via le VPN.

13. Procédé selon l'une quelconque des revendications précédentes, dans lequel les premières informations de configuration, ou la partie des premières informations de configuration, ou les secondes informations de confirmation, ou la partie des secondes informations de confirmation, sont chiffrées.

14. Procédé selon l'une quelconque des revendications précédentes, dans lequel les premières informations de configuration, ou la partie des premières informations de configuration, ou les secondes informations de configuration, ou la partie des secondes informations de configuration, sont sous l'une au moins des formes suivantes : texte brut, code-barres, code QR.

15. Procédé selon l'une quelconque des revendications précédentes, dans lequel le VPN est un VPN temporaire ayant une durée de vie prédéterminée.
